# EUROPEAN PATENT APPLICATION

(11) **EP 1 892 161 A1**
(43) Date of publication of application: **27.02.2008**
(21) Application number: 06822359.3
(22) Date of filing: 26.10.2006
(51) Int. Cl.: B60R 21/20, B60N 2/42, B60R 21/02

(54) **OCCUPANT RESTRAINT DEVICE**

(30) Priority: 09.11.2005 JP 2005325027
(71) Applicant: TAKATA CORPORATION, Minato-ku, Tokyo 106-8510 (JP)
(72) Inventor: KUMAGAI, Masayoshi, Tokyo 106-8510 (JP); YOSHIKAWA, Hiromichi, Tokyo 106-8510 (JP); KOSHIKAWA, Kimihiro, Tokyo 106-8510 (JP)
(74) Representative: Vossius & Partner
(86) International application number: PCT/JP2006/321390
(87) International publication number: WO 2007/055106

(57) **Abstract**

A passenger constraining apparatus configured to limit the amount of upward inflation of a seat bag is provided. A passenger constraining apparatus 10 includes a seat bag 12 extending in the lateral width direction of a seat, and being inflatable so as to push a seat cushion from below, a retainer 11 installed on a seat pan 1, an inner bag 13 arranged in the seat bag 12, and an inflator 14 for inflating the seat bag 12 and the inner bag 13. The inner bag 13 is connected at the lower portion thereof with the retainer 11, and the upper portion thereof is connected to the upper portion of the seat bag 12.

## Description

### Technical Field

The present invention relates to a passenger constraining apparatus for constraining a passenger seated on a seat of a motor vehicle or the like upon collision and, more specifically, to a passenger constraining apparatus configured to constrain a lumber part of the passenger upon front collision and prevent the passenger's body from moving forward and downward.

### Background Art

As a system for constraining a passenger of a motor vehicle upon collision which prevents a submarine phenomenon of the passenger sneaking through the underside of a lap belt upon front collision even with a seat belt attached, Japanese Unexamined Patent Application Publication No. 2004-338514 discloses a passenger constraining apparatus having a seat bag (which is referred to as a bag body in Patent Publication) which is inflatable and is arranged at a position between a seat cushion and a seat pan so that the front portion of the seat cushion is pushed upward upon collision of the vehicle by causing the seat bag to be inflated, wherein an auxiliary bag is provided in the seat bag and an inflator is arranged in the auxiliary bag. When the inflator is activated, the auxiliary bag is inflated first, and then the seat bag is inflated by gas flowed out from the auxiliary bag.
Patent Document 1: Japanese Unexamined Patent Application Publication No. 2004-338514

According to the passenger constraining apparatus disclosed in Japanese Unexamined Patent Application Publication No. 2004-338514 shown above, the auxiliary bag and the upper portion of the seat bag are not connected to each other. Therefore, the seat bag is possibly inflated to a level higher than the inflated auxiliary bag.

### Disclosure of Invention

It is an object of the present invention to provide a passenger constraining apparatus configured to limit the amount of upward inflation of a seat bag.

A passenger constraining apparatus according to the present invention having a seat bag being arranged between a seat cushion and an under-seat-cushion member and being inflatable so as to push the seat cushion from below and an inflator for inflating the seat bag upon emergency of a vehicle includes: an inner bag being provided in the seat bag and having a smaller capacity than the seat bag, wherein the inflator is installed so as to supply gas into the inner bag, the lower portion of the inner bag is connected to the under-seat-cushion member and the upper portion of the inner bag is connected to the upper portion of the seat bag.

A configuration in which the seat bag is configured to be inflated and deployed from the front end side to the rear end side of the under-seat-cushion member, and the inner bag is arranged on the front end side of the seat bag in an inflated state, and the lower portion of the inner bag is connected to the front end side of the under-seat-cushion member, and the upper portion of the inner bag is connected to the upper portion of the seat bag on the front end side in a state of being inflated is also applicable.

In a state in which the seat bag and the inner bag are inflated, a maximum value h₁ of the thickness in terms of the vertical direction of the portion of the seat bag where the inner bag is connected may be smaller than a maximum value h₂ of the thickness in terms of the vertical direction of the portion thereof where the inner bag is not connected.

### Brief Description of the Drawings

Fig. 1a is a perspective view of a passenger constraining apparatus according to an embodiment. Fig. 1b is a cross-sectional view taken along the line Ib-Ib in Fig. 1a.
Fig. 2 is a perspective view of a frame of a seat provided with the passenger constraining apparatus according to another embodiment.
Fig. 3 is a cross-sectional view taken along the line III-III in Fig. 2.

### Best Mode for Carrying Out the Invention

According to a passenger constraining apparatus in the present invention, when an inflator is activated to inject gas in case of emergency such as collision of a vehicle, gas is supplied to the interior of an inner bag from the inflator to inflate the inner bag and the gas in the inflator is flowed out from the gas discharge portions to a seat bag, so that the seat bag is inflated. A seat cushion is pushed upward from below by the inflated seat bag or is hardened by being compressed by the push-up force, so that the forward movement (submarine phenomenon) of a lumber part of a passenger is prevented or restrained.

In the present invention, the inner bag is rapidly inflated by high-pressure gas supplied from the inflator prior to the seat bag, and then the seat bag is inflated.

In the present invention, the lower portion of the inner bag is connected to an under-seat-cushion member, and the upper portion thereof is connected to the upper portion of the seat bag, so that the amount of upward inflation of the seat bag is limited by the inner bag.

In a mode of the present invention, when the seat bag is inflated, the amount of upward inflation of the seat bag on the front end side is limited by the inner bag. Consequently, the seat bag is quickly inflated toward the rear end side of the under-seat-cushion member without being inflated so as to protrude excessively upward.

In a state in which the seat bag and the inner bag are inflated, a configuration in which a maximum value h₁ of the thickness in terms of the vertical direction of the portion of the seat bag where the inner bag is connected (that is, the front end side of the seat bag) is smaller than a maximum value h₂ of the thickness in terms of the vertical direction thereof where the inner bag is not connected (that is, the rear end side of the seat bag) is also applicable. Accordingly, the rearward inflation of the seat bag is further encouraged.

Referring now to the drawings, embodiments of the present invention will be described.

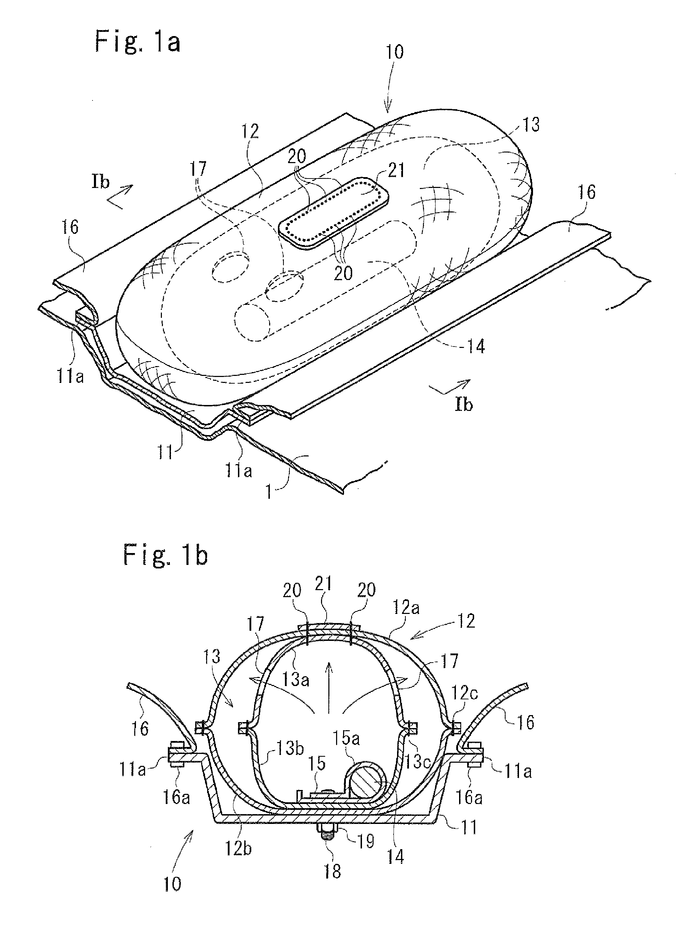

Fig. 1a is a perspective view of a passenger constraining apparatus according to an embodiment, and Fig. 1b is a cross-sectional view taken along the line Ib-Ib in Fig. 1a. In the following description, the lateral direction and fore-and-aft direction represent the direction of lateral width and the fore-and-aft direction of the seat in which the passenger constraining apparatus is installed.

A seat pan 1 is arranged under a seat cushion (not shown) of the seat mounted to a motor vehicle, and a passenger constraining apparatus 10 is arranged on top of the front portion of the seat pan 1, that is, between the seat cushion and the seat pan 1.

The passenger constraining apparatus 10 includes a retainer 11 in the shape of a container opened on top, an inflatable seat bag 12 stored in the retainer 11 in a folded state, an inner bag 13 arranged in the seat bag 12, an inflator 14 for inflating the seat bag 12 and the inner bag 13 in case of emergency of the vehicle, a fixing member 15 that fixes the seat bag 12, the inner bag 13 and the inflator 14 to the retainer 11, and a lid 16 that closes the upper opening of the retainer 11.

The retainer 11 has a laterally elongated substantially parallelepiped shape, and is arranged on the seat pan 1 with the longitudinal direction thereof directed in the lateral direction. A method of attaching the retainer 11 to the seat is arbitrary. For example, it may be fixed to the seat pan 1 by bolts or the like for example, and may be connected at the both ends thereof to side frames (not shown) on the left and right sides of the seat. In the latter case, the movable unit 1 does not have to be installed.

The upper opening of the retainer 11 is formed with a flange 11a for securing the lid 16 at the peripheral edge thereof.

The seat bag 12 extends in the lateral direction in the interior of the retainer 11. In this embodiment, as shown in Fig. 1b, the seat bag 12 is a bag-shaped member formed by stitching the peripheral portions of two panels 12a, 12b which constitute respectively an upper half side and a lower half side of the outer peripheral surface in an inflated state. Reference numeral 12c represents a seam of the stitch.

In this embodiment, the respective panels 12a, 12b have the shape of a laterally long circle or an oval in plan view respectively. The dimensions of these panels 12a, 12b are substantially the same.

The inner bag 13 is provided substantially at the center of the seat bag 12 in terms of the longitudinal direction. The inner bag 13 has a smaller capacity than the seat bag 12, and extends in the longitudinal direction of the seat bag 12. In this embodiment, the inner bag 13 is also a bag-shaped member formed by stitching the peripheral portions of two panels 13a, 13b which constitute respectively an upper half side and a lower half side of the outer peripheral surface in an inflated state. Reference numeral 13c represents a seam of the stitch.

The respective panels 13a, 13b are smaller in surface area in plan view than the respective panels 12a, 12b which constitute the aforementioned seat bag 12, and has a similar shape in plan view as the respective panels 12a, 12b. The dimensions of these panels 13a, 13b are substantially the same.

The upper side panels 12a, 13a of the seat bag 12 and the inner bag 13 are stitched by a seam 20 at portions near the center in terms of the lateral direction and the fore-and-aft direction. Reference numeral 21 designates a reinforcing cloth placed to the joint portion thereof from the outside of the seat bag 12 and stitched together with the panels 12a, 13a by the seam 20.

As shown in Fig. 1b, the upper panel 13a of the inner bag 13 is formed with a gas discharge port 17 as a discharge port for allowing gas in the inner bag 13 to flow out into the seat bag 12. In this embodiment, two gas discharge ports 17 are provided. However, the invention is not limited thereto. In this embodiment, the gas discharge ports 17, 17 are both arranged at positions close to one end of the inner bag 13 with respect to the midsection thereof in terms of the longitudinal direction. The reason thereof will be described later.

The inflator 14 and the fixing member 15 are provided in the interior of the inner bag 13. The inflator 14 is a substantially cylindrical member in this embodiment, and is arranged with the axial line thereof directed in parallel to the longitudinal direction of the inner bag 13. In this embodiment, a plurality of gas injection ports (not shown) are provided on the inflator 14 at circumferentially different positions along the side peripheral surface on one side in terms of the axial direction thereof. The inflator 14 is configured to inject gas from the gas injection ports in the radial direction, that is, in the direction of the diameter of the inner bag 13.

The inflator 14 is arranged in such a manner that the end portion thereof provided with the gas injection ports is positioned at one of the both end portions of the inner bag 13 in terms of the longitudinal direction thereof which is farther from the gas discharge ports 17. With the inflator 14 arranged in this manner, gas injected from the gas injection ports stays in the inner bag 13 for a while without flowing out directly from the gas discharge ports 17 into the seat bag 12.

Accordingly, inflation of the inner bag 13 is encouraged, and injected gas from the inflator 14 at a high temperature is prevented from blowing directly onto the respective panels 12a, 12b which constitute the seat bag 12 or the seam 12c which joins these panels.

The fixing member 15 is a plate-shaped member extending along the bottom surface of the retainer 11, and is arranged so as to press the lower panels 13b, 12b of the inner bag 13 and the seat bag 12 against the bottom surface of the retainer 11 from the inner side of the inner bag 13. The fixing member 15 also serves as an inflator holder and the inflator 14 is held by the fixing member 15 by a curved bracket portion 15a.

A stud bolt 18 is provided so as to project from the fixing member 15. The stud bolt 18 is inserted through bolt insertion holes (not shown) provided respectively on the panels 13b, 12b and the bottom surface of the retainer 11, and is fixed to the retainer 11 by a nut 19 tightened thereto.

Accordingly, the inner bag 13 and the seat bag 12 are connected to the retainer 11 at the lower portions thereof by the fixing member 15 and the stud bolt 18. The upper portion of the inner bag 13 is connected to the upper portion of the seat bag 12 by the seam 20 as described above.

The lid 16 is a substantially rectangular-shaped member for covering the upper opening of the retainer 11, and the peripheral portion thereof is aligned with the flange 11a of the retainer 11 and is secured by a securing member 16a. A tear line (weakened portion) is extending so as to traverse the lid 16 along the lateral direction and, when the seat bag 12 and the inner bag 13 are inflated, the lid 16 is torn along the tear line due to the inflation pressure thereof and open in the fore-and-aft direction in a flap shape as shown in Fig. 1b .

In this embodiment, the dimensions of the inner bag 13 (the length of periphery of the inner bag 13 near the center, etc.) are set so that the thickness of the inflated seat bag 12 near the center thereof in terms of the vertical direction falls in a range from 50 to 200 mm, more preferably, from 80 to 150 mm.

The operation of the passenger constraining apparatus 10 in this configuration is as follows.

When front collision of the vehicle is detected, the inflator 14 is activated and gas is injected from respective gas injection ports 14a into the inner bag 13. The inner bag 13 is inflated by the gas from the inflator 14, and the gas in the inner bag 13 is flowed out from the respective gas discharge ports 17 into the seat bag 12 as indicated by an arrow in Fig. 1b, so that the seat bag 12 is inflated. The front portion of the seat cushion of the seat is pushed upward by, or hardened by the push-up force of, the inflated seat bag 12, so that the lumber part of the passenger seated on this seat is prevented or restrained from moving toward the front.

In this case, the inner bag 13 is inflated by high-pressure gas supplied from the inflator 14 prior to the seat bag 12, and then, the seat bag 12 is inflated.

In this passenger constraining apparatus 10, since the lower portion of the inner bag 13 is connected to the retainer 11, and the upper portion thereof is connected to the upper portion of the seat bag 12, the amount of upward inflation of the seat bag 12 is limited by the inner bag 13.

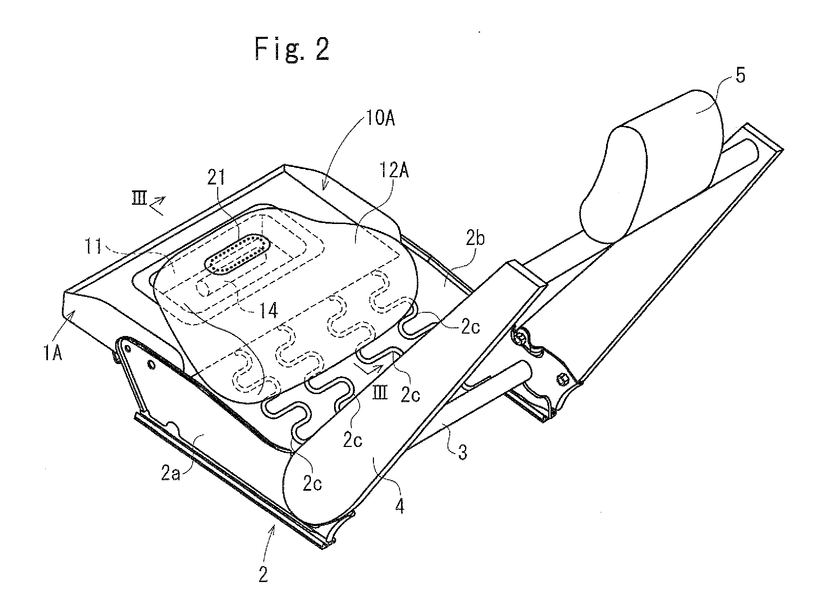

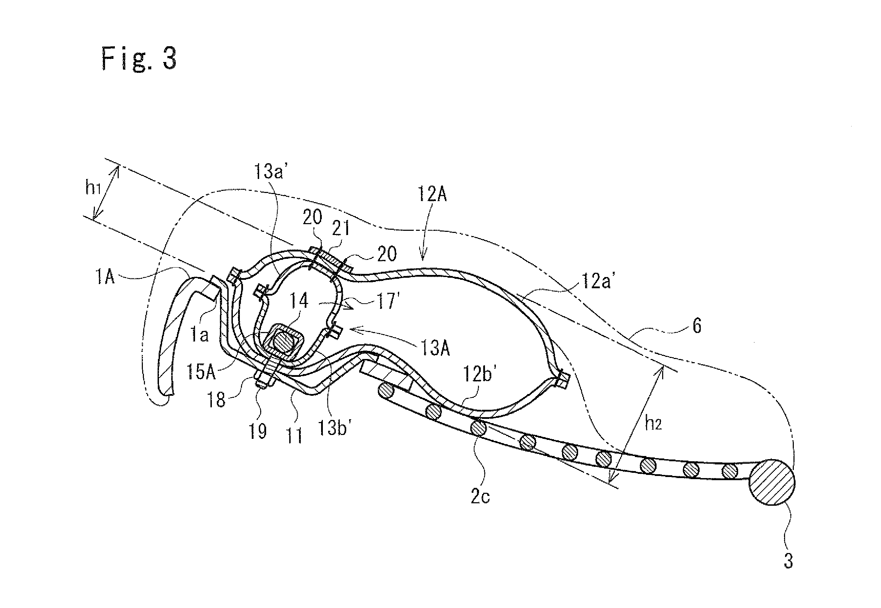

Fig. 2 is a perspective view of a frame of a seat provided with a passenger constraining apparatus according to another embodiment, and Fig. 3 is a cross-sectional view taken along the line III-III in Fig. 2.

As shown in Fig. 2, the frame which constitutes the seat in this embodiment includes a base frame 2 and a back frame 4 rotatably connected to the base frame 2 via a spindle 3 or a reclining device (not shown). A head rest 5 is attached to the upper portion of the back frame 4. The base frame 2 includes left and right side frames 2a, 2b, and a seat pan 1A is provided so as to extend between the front portions of the side frames 2a, 2b.

In this embodiment, the seat pan 1A has a width in the fore-and-aft direction which is able to support only the front end side of a seat cushion 6 (Fig. 3) disposed on the base frame 2. The rear end side of the seat cushion 6 with respect to the seat pan 1A is supported by springs (S-springs) 2c extending between the seat pan 1A and the spindle 3.

The springs 2c extend in the fore-and-aft direction in a laterally serpentined pattern and the front ends thereof are secured to the rear ends of the seat pan 1A and the rear ends are secured to the spindle 3.

A passenger constraining apparatus 10A in this embodiment includes the retainer 11 in the shape of a container opened on top, an inflatable seat bag 12A stored in the retainer 11 in a folded state, an inner bag 13A arranged in the seat bag 12A, the inflator 14 for inflating the seat bag 12A and the inner bag 13A in case of emergency of the vehicle, a fixing member 15A for fixing the seat bag 12A, the inner bag 13a and the inflator 14 to the retainer 11, and a lid (not shown in Figs. 2 and 3) that closes the upper opening of the retainer 11.

As shown in Fig. 3, the seat bag 12A is configured to be capable of inflating over a relatively wide width in the fore-and-aft direction from the upper side of the seat pan 1A to the upper side of the front half portion of the spring 2c. As shown in Fig. 2, in this embodiment, the seat bag 12A in an inflated state has a shape gradually being narrowed in lateral width from the midsection in terms of the fore-and-aft direction toward the front in plan view.

In this embodiment as well, the seat bag 12A is a bag-shaped member formed by stitching the peripheral portions of two panels 12a', 12b' which constitute respectively an upper half side and a lower half side of the outer peripheral surface in an inflated state via a seam (reference numeral is omitted).

As shown in Fig. 3, the inner bag 13A has a width in the fore-and-aft direction in an inflated state smaller than half the width of the seat bag 12A in the fore-and-aft direction in an inflated state. The inner bag 13A is also a bag-shaped member formed by stitching the peripheral portions of two panels 13a', 13b' which constitute respectively an upper half side and a lower half side of the outer peripheral surface in an inflated state via a seam (reference numeral is omitted).

The inner bag 13A is arranged at a position relatively close to the front end portion in the interior of the seat bag 12A in an inflated state, and the upper panel 13a' is joined (stitched) to the front portion of the upper side panel 12a' of the seat bag 12A by the seam 20. Reference numeral 21 designates a reinforcing cloth provided at the joint portion.

The upper panel 13a' of the inner bag 13A is provided with a gas discharge port 17' for allowing gas in the inner bag 13A to flow out into the seat bag 12A at a position which faces rearward when the inner bag 13A is inflated.

The substantially cylindrical inflator 14 is arranged in the inner bag 13A. The inflator 14 is held by an inflator holder 15A, and the stud bolt 18 is extended from the inflator holder 15A. The stud bolt 18 is inserted through respective bolt insertion holes (not shown) on the panels 13b', 12b' and the bottom surface of the retainer 11, and is fixed to the retainer 11 by the nut 19 tightened thereto.

Accordingly, the inner bag 13A is connected at the lower portion thereof to the retainer 11 by the fixing member 15 and the stud bolt 18, and is connected at the upper portion to the upper portion of the front end side of the seat bag 12A by the seam 20.

In this embodiment, as shown in Fig. 3, the dimensions of the inner bag 13A (the peripheral length of the inner bag 13A) are set so that a maximum value h₁ of the thickness in terms of the vertical direction of the seat bag 12A at the front end side (the portion where the inner bag 13A is connected) is smaller than a maximum value h₂ of the thickness in terms of the vertical direction of the seat bag 12A at the rear end side (the portion where the inner bag 13A is not connected) in a state in which the seat bag 12A and the inner bag 13A are inflated.

In this embodiment, the seat bag 12A is folded in such a manner that the width is decreased from the rear end side to the front end side and stored in the retainer 11.

The passenger constraining apparatus 10A is configured with the lid (not shown in Figs. 2 and 3) attached to the retainer 11 so as to cover the folded member of the seat bag 12A.

In this embodiment, an opening 1a for installing the passenger constraining apparatus is provided on the seat pan 1A, and the passenger constraining apparatus 10A is installed on the seat pan 1A with the retainer 11 fitted into the opening 1a.

Other configurations of the passenger constraining apparatus 10A are the same as those of the passenger constraining apparatus 10 in Fig. 1 described above, and the reference numerals in Figs. 2 and 3 which are the same as those in Fig. 1 represent the same parts.

In this embodiment, the inner bag 13A is inflated quickly by gas from the inflator 14 first, and correspondingly, the front end side of the seat bag 12A is inflated out of the retainer 11, and then the gas in the inner bag 13A flows into the seat bag 12A via the gas discharge port 17', so that the seat bag 12A is inflated and deployed as if it extends rearward. In a state in which the seat bag 12A is completely inflated, the rear portion of the seat bag 12A is positioned above the S-spring 2c.

In the passenger constraining apparatus 10A, since the amount of upward inflation of the front end side of the seat bag 12A is limited by the inner bag 13A, the seat bag 12A is not inflated so as to protrude upward, and the rearward inflation of the seat bag 12A is encouraged, thereby being inflated from above the seat pan 1A to above the spring 2c in a relatively early stage.

In this embodiment, the dimensions of the inner bag 13A is set so that a maximum value h₁ of the thickness in terms of the vertical direction of the seat bag 12A at the front end side is smaller than a maximum value h₂ of the thickness in terms of the vertical direction of the seat bag 12A at the rear end side in a state in which the seat bag 12A and the inner bag 13A are inflated. Therefore, the effect of encouraging the inflation of the seat bag 12A toward the rear is remarkable.

The embodiments shown above are examples of the present invention, and the present invention is not limited to the embodiments shown above.

For example, the base frame of the seat in the respective embodiments in Figs. 2 and 3 has a structure in which the front end side of the seat cushion is supported by the seat pan and the rear end side with respect to the seat pan is supported by the spring (S-spring). However, needless to say, the present invention is applicable to a structure in which the entire seat cushion (from the front end side to the rear end side of the seat cushion) is supported by the seat pan.

The present application is based on Japanese Patent Application (Japanese Patent Application No. 2005-325027) filed as of November 9, 2005, the entire contents of which are incorporated herein by reference.

## Claims

1. A passenger constraining apparatus including a seat bag being arranged between a seat cushion and an under-seat-cushion member and being inflatable so as to push the seat cushion from below and an inflator for inflating the seat bag upon emergency of a vehicle comprising:
an inner bag being provided in the seat bag and having a smaller capacity than the seat bag,
wherein the inflator is installed so as to supply gas into the interior of the inner bag,
wherein the lower portion of the inner bag is connected to the under-seat-cushion member and
wherein the upper portion of the inner bag is connected to the upper portion of the seat bag.

2. The passenger constraining apparatus according to Claim 1, wherein the seat bag is configured to be inflated and deployed from the front end side to the rear end side of the under-seat-cushion member, and the inner bag is arranged on the front end side of the seat bag in an inflated state, and the lower portion of the inner bag is connected to the front end side of the under-seat-cushion member, and the upper portion of the inner bag is connected to the upper portion of the seat bag on the front end side in an inflated state.

3. The passenger constraining apparatus according to Claim 2, wherein in a state in which the seat bag and the inner bag are inflated, a maximum value h₁ of the thickness in terms of the vertical direction of the portion of the seat bag where the inner bag is connected may be smaller than a maximum value h₂ of the thickness in terms of the vertical direction of the portion thereof where the inner bag is not connected.

4. The passenger constraining apparatus according to Claim 1, wherein the under-seat-cushion member includes a seat pan and a retainer in which the seat bag is stored, and
wherein the lower portion of the inner bag is connected to the retainer.

5. The passenger constraining apparatus according to Claim 4, wherein the inflator and a fixing member which holds the inflator are arranged in the interior of the inner bag, and wherein the fixing member and the inner bag and the seat bag are connected to the retainer with a bolt.

6. The passenger constraining apparatus according to Claim 4, wherein the under-seat-cushion member further includes an S-spring, and the rear portion of the seat bag is positioned above the S-spring when the seat bag is inflated.

7. The passenger constraining apparatus according to Claim 1, wherein the upper portion of the inner bag and the upper portion of the seat bag are connected by stitching.
